(19) Europäisches Patentamt
European Patent Office
Office européen des brevets

(11) **EP 2 725 393 A1**

(12) **EUROPEAN PATENT APPLICATION**
published in accordance with Art. 153(4) EPC

(43) Date of publication:
**30.04.2014 Bulletin 2014/18**

(51) Int Cl.:
*G02B 5/02* (2006.01)     *B32B 7/02* (2006.01)
*B32B 27/18* (2006.01)     *G02F 1/1335* (2006.01)
*G09F 9/00* (2006.01)

(21) Application number: **12804466.6**

(22) Date of filing: **28.06.2012**

(86) International application number:
**PCT/JP2012/066621**

(87) International publication number:
**WO 2013/002353 (03.01.2013 Gazette 2013/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2011 JP 2011145038**

(71) Applicant: **Nitto Denko Corporation**
**Ibaraki-shi, Osaka 567-8680 (JP)**

(72) Inventors:
• **KISHI Atsushi**
**Ibaraki-shi, Osaka 567-8680 (JP)**

• **NINOMIYA Masaki**
**Ibaraki-shi, Osaka 567-8680 (JP)**
• **HASHIMOTO Naoki**
**Ibaraki-shi, Osaka 567-8680 (JP)**
• **KURAMOTO Hiroki**
**Ibaraki-shi, Osaka 567-8680 (JP)**
• **TAKEMOTO Hiroyuki**
**Ibaraki-shi, Osaka 567-8680 (JP)**

(74) Representative: **HOFFMANN EITLE**
**Patent- und Rechtsanwälte**
**Arabellastrasse 4**
**81925 München (DE)**

(54) **ANTIGLARE FILM, POLARIZING PLATE, IMAGE DISPLAY APPARATUS AND PROCESS FOR MANUFACTURING ANTIGLARE FILM**

(57)    The present invention provides an anti-glare film having superior display characteristics of both having anti-glare properties and preventing white blur from occurring as well as having a higher production yield by preventing formation of a projection as a defect in outward appearance. The anti-glare film is an anti-glare film including: a translucent base: and an anti-glare layer on at least one surface of the translucent base, wherein the anti-glare layer is formed using an anti-glare layer-forming material containing a resin, particles, and thixotropy-imparting agents, the anti-glare layer includes a flocculated portion forming a convex portion on a surface of the anti-glare layer by flocculation of the particles and the thixotropy-imparting agents, and in the flocculated portion, the particles are present in the state of being gathered in an in-plane direction of the anti-glare layer.

FIG. 1A

EP 2 725 393 A1

FIG. 1B

## Description

Technical Field

The present invention relates to an anti-glare film, a polarizing plate, an image display, and a method for producing an anti-glare film.

Background Art

Anti-glare films are disposed on the surfaces of various image displays such as cathode ray tubes (CRTs), liquid crystal displays (LCDs), plasma display panels (PDPs), and electroluminescence displays (ELDs) in order to prevent a reduction in contrast due to reflection of external light and reflected glare of images. In the case where an anti-glare film is used on a topmost surface of a display, there is a problem in that images in black display are washed out due to light diffusion when used in bright environment, i.e., a problem of "white blur". This problem of white blur can be solved by degrading anti-glare properties (diffuseness) of the anti-glare film. However, reflected glare preventive properties are deteriorated as trade-off, resulting in degradation of original functions. As described above, an enhancement in anti-glare properties and an improvement in white blur are generally in a contradictory relationship, and various proposals for having both of these characteristics have been made.

For example, it has been proposed that a fine particle-containing coating material for forming an anti-glare layer is coated on a base, and when the base is dried, a Benard cell structure is caused to be formed on a surface of a coating layer by convection generated at the time of volatilizing a solvent, and thus, a surface profile has asperities with gradual convex portions (for example, see Patent Document 1).

It also has been proposed that display characteristics are enhanced by forming a flocculated portion having a three dimensional conformation by fine particles (for example, see Patent Document 2). In Patent Document 2, a surface adjustment layer is formed on a surface of an anti-glare layer in order to make asperities of the anti-glare layer to be with gradual convex portions, thereby forming a bilayer structure.

Prior Art Documents

Patent Document

Patent Document 1: JP 2008-257255 A
Patent Document 2: Japanese Patent No. 4641846

Summary of Invention

Problem to be Solved by the Invention

In Patent Document 1 described above, a Benard cell is formed utilizing gathering of fine particles in a planar state, so that the surface of the anti-glare layer has asperities with gradual convex portions, which results in having both of anti-glare properties and the contrast. However, in order to form a desired profile utilizing a Benard cell, it is required to carefully control production conditions in the coating and drying steps.

On the other hand, in Patent Document 2, in order to make a surface of an anti-glare layer to have asperities with gradual convex portions, a surface adjustment layer is further formed on a surface of an anti-glare layer formed by flocculating particles, thereby having a bilayer structure. Therefore, the number of steps of producing the anti-glare layer is increased compared with the case of producing an anti-glare layer having a single layer structure. Thus, productivity is low.

Hence, the inventors of the present invention started working on a novel development in order to form an anti-glare layer having surface asperities with gradual convex portions by flocculating particles and having not a bilayer structure but a single layer structure considering the productivity and the cost thereof. In the middle of earnest studies, the inventors of the present invention faced a novel challenge of a defect found on the surface of an anti-glare film by an outward appearance examination (in black room by visual check with a fluorescent lamp) in the case of the anti-glare layer having a single layer structure formed utilizing flocculation of particles. The anti-glare film having this defect in outward appearance cannot be used as a product and was thus abandoned. For example, when a defect in outward appearance is found in leaflets of polarizing plates using an anti-glare film, even if the number of the defects in outward appearance is only one, all of the polarizing plates should be abandoned. Therefore, when the polarizing plates are used for a large-size liquid crystal panel, the abandoned area due to the defect in outward appearance is large, so that a yield is really low.

In the studies of a mechanism of this defect in outward appearance, it was found that this defect in outward appearance is caused by a projection (hereinafter also referred to as a "protrusion") generated on the surface of an anti-glare layer. It is considered that this defect in outward appearance of the projection appears specifically significantly when an anti-glare layer having a surface profile with gradual convex portions is formed. That is, it is considered that a significant defect in outward appearance does not appear in an anti-glare film having rough asperities (high arithmetic average surface roughness Ra) on the surface of the anti-glare layer and superior anti-glare properties because of light diffusion caused by an anti-glare effect even if the anti-glare film includes this projection.

With further research, the inventors of the present invention observed a cross-section of this projection with a scanning electron microscope (SEM) and figured out that the cause of generation of this projection is the presence of an overlap of particles in the thickness direction of the anti-glare layer.

It is considered to reduce the number of parts of particles to be used or to employ particles having a small particle size in order to remove this projection from the anti-glare layer. However, in this case, it has been difficult to form desired surface asperities with gradual convex portions both having anti-glare properties and preventing white blur from occurring. Furthermore, it is considered to prevent particles from overlapping in the thickness direction by increasing the thickness of the anti-glare layer relative to the particles. However, in this case, a problem of warping the film arises.

Hence the present invention is intended to provide an anti-glare film including an anti-glare layer formed utilizing flocculation of particles, having superior display characteristics of both having anti-glare properties and preventing white blur from occurring as well as having a higher production yield by preventing formation of a projection as a defect in outward appearance and a method for producing the same. The present invention is intended to further provide a polarizing plate and an image display, using this anti-glare film.

Means for Solving Problem

In order to achieve the aforementioned object, the anti-glare film according to the present invention is an anti-glare film including: a translucent base: and an anti-glare layer on at least one surface of the translucent base, wherein the anti-glare layer is formed by using an anti-glare layer-forming material containing a resin, particles, and thixotropy-imparting agents, the anti-glare layer includes a flocculated portion forming a convex portion on a surface of the anti-glare layer by flocculation of the particles and the thixotropy-imparting agents, and in the flocculated portion, the particles are present in the state of being gathered in an in-plane direction of the anti-glare layer.

The polarizing plate according to the present invention is a polarizing plate including: a polarizer and the anti-glare film according to the present invention.

The image display according to the present invention is an image display including: the anti-glare film according to the present invention.

The image display according to the present invention is an image display including: the polarizing plate according to the present invention.

A method for producing an anti-glare film according to the present invention is a method for producing an anti-glare film having a translucent base and an anti-glare layer on at least one surface of the translucent base, the method including: an anti-glare layer forming step of coating a coating solution containing a resin, particles, thixotropy-imparting agents, and a solvent on at least one surface of the translucent base to form a coating layer and curing the coating layer to form an anti-glare layer, wherein as the coating solution, a coating solution having a Ti value in a range from 1.3 to 3.5 is used.

Effects of the Invention

According to the anti-glare film and the method for producing the same of the present invention, the anti-glare layer has superior display characteristics of both having anti-glare properties and preventing white blur from occurring and can improve a production yield by preventing formation of a projection on the surface of the anti-glare layer as a defect in outward appearance. Moreover, an image display using the anti-glare film or a polarizing plate having this anti-glare film is superior in display characteristics.

Brief Description of Drawings

[FIG. 1] FIG. 1A is an optical microscope (semi-transmissive mode) photograph of a surface of an anti-glare layer in an anti-glare film of Example 1. In FIG. 1A, a scale is 20 $\mu$m. FIG. 1B is a schematic view showing a distribution of particles observed in the photograph of FIG. 1A.

[FIG. 2] FIGs 2A to 2C are SEM (SCANNING ELECTRON MICROSCOPE) photographs of cross-sections of an anti-glare film of Example 1 according to the present invention. FIGs, 2A and 2B are photographs of the same cross-section. The photograph of FIG. 2A was taken at ×2000 magnification, and the photograph of FIG. 2B was taken at ×5000 magnification. FIG. 2C is a photograph of another cross-section of the same anti-glare film.

[FIG. 3] FIG. 3 is a three-dimensional profile showing a surface profile of the anti-glare film of Example 1.

[FIG. 4] FIG. 4A is an optical microscope (semi-transmissive mode) photograph of a surface of an anti-glare layer in an anti-glare film of Comparative Example 2. In FIG. 4A, a scale is 20 μm. FIG. 4B is a schematic view showing a distribution of particles observed in the photograph of FIG. 4A.

[FIG. 5] FIG. 5A is a SEM (SCANNING ELECTRON MICROSCOPE) photograph of a cross-section of an anti-glare film of Comparative Example 2. In FIG. 5A, a scale is 10 μm. FIG. 5B is a schematic view showing a distribution of particles in the photograph of FIG. 5A.

[FIG. 6] FIGs. 6A and 6B are three-dimensional profiles showing surface profiles of an anti-glare film of Comparative Example 2.

[FIG. 7] FIG. 7 is a TEM (transmission electron microscope) photograph of a permeable layer of the anti-glare film of Example 1.

[FIG. 8] FIG. 8 is a schematic view illustrating the definition of the height of a convex portion.

[FIG. 9A] FIG. 9A is a schematic view showing a configuration of an example of the anti-glare film according to the present invention.

[FIG. 9B] FIG. 9B is a schematic view showing a configuration of an example of an anti-glare film including an anti-glare layer containing no thixotropy-imparting agent, which is different from the present invention.

[FIG. 10A] FIG. 10A is a diagram schematically illustrating an assumable mechanism in relation to flocculation of particles in the anti-glare film according to the present invention.

[FIG. 10B] FIG. 10B is a diagram schematically illustrating an assumable mechanism in relation to flocculation of particles in an anti-glare film including an anti-glare layer containing no thixotropy-imparting agent, which is different from the present invention.

[FIG. 10C] FIG. 10C shows a diagram schematically illustrating an assumable mechanism in relation to flocculation of particles in the anti-glare film according to the present invention in the case of forming a permeable layer.

[FIG. 10D] FIG. 10D is a diagram schematically illustrating an assumable mechanism in relation to flocculation of particles in the case where a permeable layer is formed in an anti-glare film including an anti-glare layer containing no thixotropy-imparting agent, which is different from the present invention.

[FIG. 11] FIGs. 11A and 11B are schematic views illustrating an example of the definitions of the thickness direction and the in-plane direction of the anti-glare layer in the anti-glare film according to the present invention.

Description of Embodiments

It is preferred that the thixotropy-imparting agents are at least one kind selected from the group consisting of organoclay, oxidized polyolefin, and denatured urea in the anti-glare film according to the present invention.

It is preferred that the convex portion has a height from a roughness mean line of the anti-glare layer of less than 0.4 times the thickness of the anti-glare layer in the anti-glare film according to the present invention.

It is preferred that the number of defects in outward appearance having a maximum diameter of 200 μm or more is 1 or less per 1 m$^2$ of the anti-glare layer in the anti-glare film according to the present invention.

It is preferred that the anti-glare layer has a thickness (d) in a range from 3 to 12 μm, and the particles have a particle size (D) in a range from 2.5 to 10 μm, in the anti-glare film according to the present invention. In this case, a relationship between the thickness (d) and the particle size (D) preferably satisfies $0.3 \leq D/d \leq 0.9$.

It is preferred that the anti-glare layer contains 0.2 to 12 parts by weight of the particles and 0.2 to 5 parts by weight of the thixotropy-imparting agents relative to 100 parts by weight of the resin in the anti-glare film according to the present invention.

It is preferred that the anti-glare film according to the present invention includes a permeable layer formed by permeating the resin through the translucent base between the translucent base and the anti-glare layer.

Next, the present invention is described in detail. The present invention, however, is not limited by the following description.

In the anti-glare film according to the present invention, the anti-glare layer is on at least one surface of the translucent base. The translucent base is not particularly limited and can be, for example, a transparent plastic film base or the like.

The transparent plastic film base is not particularly limited and preferably has superior light transmittance of visible light (preferably 90% or more of light transmittance) and superior transparency (preferably 1% or less of haze value), and examples thereof include transparent plastic film bases described in JP 2008-90263 A. As the transparent plastic film base, a base having optically low birefringence is preferably used. The anti-glare film according to the present invention can be used as a protective film in a polarizing plate, for example. In this case, the transparent plastic film base preferably is a film formed of triacetylcellulose (TAC), polycarbonate, an acrylic polymer, polyolefin having a cyclic structure or a norbornene structure, or the like. In the present invention, the transparent plastic film base may be a polarizer itself as mentioned below. With such configuration, it is not necessary to include a protective layer formed of TAC or the like, so that the structure of the polarizing plate can be simplified. Thus, the number of steps of producing the polarizing plate or an image display can be reduced, so that production efficiency can be improved. Further, with such configuration, the polarizing plate can be thinner. In the case where the transparent plastic film base is a polarizer, the anti-glare layer serves as a conventional protective layer. Furthermore, with such configuration, the anti-glare film functions also as a cover plate in the case where the anti-glare film is attached to the surface of the liquid crystal cell, for example.

The thickness of the transparent plastic film base in the present invention is not particularly limited and is, for example, preferably in the range from 10 to 500 $\mu$m, more preferably from 20 to 300 $\mu$m, optimally from 30 to 200 $\mu$m from the viewpoint of strength, workability such as handleability and film thinness, for example. The refractive index of the transparent plastic film base is not particularly limited and is, for example, in the range from 1.30 to 1.80, preferably from 1.40 to 1.70.

The anti-glare layer is formed using an anti-glare layer-forming material containing the resin, the particles, and the thixotropy-imparting agents. Examples of the resin include a heat-curable resin and an ionizing radiation-curable resin cured by ultraviolet or light. As the resin, a commercially available heat-curable resin or an ultraviolet-curable resin can also be used.

As the heat-curable resin or the ultraviolet-curable resin, a curable compound having at least one of an acrylate group and a methacrylate group cured by heat, light (ultraviolet or the like) or an electron beam can be used, for example, and examples thereof include a silicone resin, a polyester resin, a polyether resin, an epoxy resin, an urethane resin, an alkyd resin, a spiroacetal resin, a polybutadiene resin, a polythiol polyene resin, and an oligomer or a prepolymer of acrylate or methacrylate of a polyfunctional compound such as a polyhydric alcohol. They may be used alone or in a combination of two or more of them.

In the resin, a reactive diluent having at least one of an acrylate group and a methacrylate group can be used, for example. As the reactive diluent, any of reactive diluents described in JP 2008-88309 A can be used, for example, and examples thereof include monofunctional acrylate, monofunctional methacrylate, polyfunctional acrylate, and polyfunctional methacrylate. As the reactive diluent, acrylate having a trifunctional group or more or methacrylate having a trifunctional group or more is preferable because the hardness of the anti-glare layer can be superior. Examples of the reactive diluent also include butanediol glycerin ether diacrylate, acrylate of isocyanuric acid, and methacrylate of isocyanuric acid. They may be used alone or in a combination of two or more of them.

The main function of the particles for forming the anti-glare layer is to impart anti-glare properties by forming surface asperities of the anti-glare layer and control the haze value of the anti-glare layer. The haze value of the anti-glare layer can be designed by controlling the difference in refractive index between the particles and the resin. Examples of the particles include inorganic particles and organic particles. The inorganic particles are not particularly limited, and examples thereof include silicon oxide particles, titanium oxide particles, aluminum oxide particles, zinc oxide particles, tin oxide particles, calcium carbonate particles, barium sulfate particles, talc particles, kaolin particles, and calcium sulfate particles. The organic particles are not particularly limited, and examples thereof include a polymethyl methacrylate resin powder (PMMA fine particles), a silicone resin powder, a polystyrene resin powder, a polycarbonate resin powder, an acrylic styrene resin powder, a benzoguanamine resin powder, a melamine resin powder, a polyolefin resin powder, a polyester resin powder, a polyamide resin powder, a polyimide resin powder, and a polyfluoroethylene resin powder. One kind of the inorganic particles or organic particles may be used alone, or two or more kinds of the same may be used in combination.

The weight-average particle size (D) of the particles is preferably in the range from 2.5 to 10 $\mu$m. By setting the weight-average particle size of the particles in the above-described range, the anti-glare film can have further superior anti-glare properties and can prevent white blur from occurring, for example. The weight-average particle size of the particles is more preferably from 3 to 7 $\mu$m. The weight-average particle size of the particles can be measured by the Coulter counter method, for example. For example, a particle size distribution measurement apparatus (COULTER MULTISIZER (trade name), manufactured by Beckman Coulter, Inc.) using a pore electrical resistance method is employed to measure an electrical resistance of an electrolyte corresponding to the volume of the particles when the particles pass through the pores. Thus, the number and volume of particles are measured and then the weight average particle size is calculated.

The shape of each of the particles is not particularly limited and may be, for example, an approximately spherical shape in the form of a bead or an indefinite shape such as a powder and is preferably an approximately spherical shape, more preferably an approximately spherical shape with an aspect ratio of 1.5 or less. Most preferably, the particles are spherical particles.

The proportion of the particles in the anti-glare layer is preferably in the range from 0.2 to 12 parts by weight, more preferably from 0.5 to 12 parts by weight, yet more preferably from 1 to 7 parts by weight, relative to 100 parts by weight of the resin. By setting the proportion of the particles in the above-described range, the anti-glare film can have further superior anti-glare properties and can prevent white blur from occurring, for example.

Examples of the thixotropy-imparting agents for forming the anti-glare layer include organoclay, oxidized polyolefin, and denatured urea.

The organoclay is preferably clay which has been subjected to an organification treatment in order to improve affinity with the resin. The organoclay can be, for example, layered clay. The organoclay may be prepared in-house or a commercially available product. Examples of the commercially available product include LUCENTITE SAN, LUCENTITE STN, LUCENTITE SEN, LUCENTITE SPN, SOMASIF ME-100, SOMASIF MAE, SOMASIF MTE, SOMASIF MEE, and SOMASIF MPE (trade names, manufactured by CO-OP Chemical Co. Ltd.); S-BEN, S-BEN C, S-BEN E, S-BEN W, S-BEN P, S-BEN WX, S-BEN N-400, S-BEN NX, S-BEN NX80, S-BEN NO12S S-BEN NEZ, S-BEN NO12, S-BEN NE, S-BEN NZ, S-BEN NZ70, ORGANAIT, ORGANAIT D, and ORGANAIT T (trade names, manufactured by Hojun Co., Ltd.); KUNIPIA F, KUNIPIA G, and KUNIPIA G4 (trade names, manufactured by Kunimine Industries, Co. Ltd.); and TIXOGEL VZ, CLAYTONE HT, and CLAYTONE 40 (trade names, manufactured by Rockwood Additives Limited).

The oxidized polyolefin may be prepared in-house or a commercially available product. Examples of the commercially available product include DISPARON 4200-20 (trade name, manufactured by Kusumoto Chemicals, Ltd.) and FLOWNON SA300 (trade name, manufactured by Kyoeisha Chemical Co., LTD.).

The denatured urea is a reactant of an isocyanate monomer or an adduct thereof and organic amine. The denatured urea may be prepared in-house or a commercially available product. The commercially available product can be, for example, BYK410 (manufactured by BYK-Chemie Corporation).

One kind of the thixotropy-imparting agents may be used alone, or two or more kinds of the thixotropy-imparting agents may be used in combination.

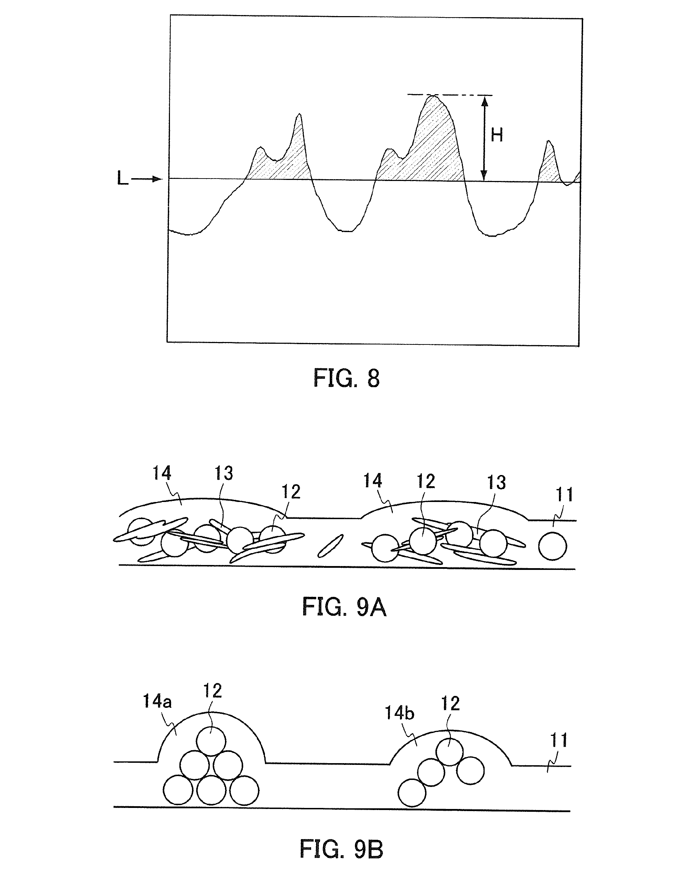

In the anti-glare film according to the present invention, the height of each convex portion from the roughness mean line of the anti-glare layer is preferably less than 0.4 times, more preferably in the range of 0.01 or more to less than 0.4 times, yet more preferably 0.01 or more to less than 0.3 times, the thickness of the anti-glare layer. With the above-described range, formation of a projection as a defect in outward appearance in each convex portion can be suitably prevented. When the anti-glare film according to the present invention includes convex portions with such height, a defect in outward appearance can be less prone to occur. The height from the mean line is described with reference to FIG. 8. FIG. 8 is a schematic view of a two-dimensional profile of a cross section of the anti-glare layer, where the straight line L indicates a roughness mean line (center line) in the two-dimensional profile. The height H from the roughness mean line to the top (of the convex portion) in the two-dimensional profile is the height of the convex portion in the present invention. In FIG. 8, a part of the convex portion, crossing the mean line is indicated by oblique hatching. The thickness of the anti-glare layer is calculated by measuring the overall thickness of the anti-glare film and subtracting the thickness of the translucent base from the overall thickness. The overall thickness and the thickness of the translucent base can be measured using a microgauge-type thickness gauge, for example.

The proportion of the thixotropy-imparting agents in the anti-glare layer is preferably in the range from 0.1 to 5 parts by weight, more preferably from 0.2 to 4 parts by weight, relative to 100 parts by weight of the resin.

The thickness (d) of the anti-glare layer is not particularly limited and is preferably in the range from 3 to 12 $\mu$m. The anti-glare film can be prevented from warping by setting the thickness (d) of the anti-glare layer in the above-described range, resulting in avoidance of a problem of reduction in productivity such as a failure at the time of transportation, for example. Moreover, when the thickness (d) is in the above-described range, the weight-average particle size (D) of the particles is preferably in the range from 2.5 to 10 $\mu$m as mentioned above. With the above-mentioned combination of the thickness (d) of the anti-glare layer and the weight-average particle size (D) of the particles, the anti-glare film can have further superior anti-glare properties. The thickness (d) of the anti-glare layer is more preferably from 3 to 8 $\mu$m.

The relationship between the thickness (d) of the anti-glare layer and the weight-average particle size (D) of the particles preferably is $0.3 \leq D/d \leq 0.9$. With such relationship, the anti-glare film can have further superior anti-glare properties, can prevent white blur from occurring, and can have no defect in outward appearance.

In the anti-glare film according to the present invention, as mentioned above, the anti-glare layer includes flocculated portions forming convex portions on a surface of the anti-glare layer by flocculating the particles and the thixotropy-imparting agents, and in the flocculated portions, the particles are present in the state of being gathered in an in-plane direction of the anti-glare layer. Thus, the convex portions become gradual convex portions. By including convex portions in such shape, the anti-glare film according to the present invention can maintain anti-glare properties and prevent white blur from occurring and can further make a defect in outward appearance less prone to occur.

The surface profile of the antiglare layer can be designed as appropriate by controlling the flocculation state of the particles contained in the anti-glare layer-forming material. The flocculation state of the particles can be controlled by quality of the material of the particles (e.g., the state of chemical modification on the surfaces of the particles, affinity with a solvent or a resin, or the like), the kinds or the combination of a resin (binder) and a solvent, and the like, for example. In the present invention, the flocculation state of the particles can be controlled by the thixotropy-imparting agents contained in the anti-glare layer-forming material. Thus, in the present invention, the flocculation state of the particles can be controlled as mentioned above, and the convex portions can be gradual convex portions.

When the translucent base in the anti-glare film according to the present invention is formed of a resin or the like, it is preferred that there is a permeable layer at the interface between the translucent base and the anti-glare layer. The permeable layer is formed by permeating a resin component contained in the anti-glare layer forming material through the translucent base. When the permeable layer is formed, adhesion between the translucent base and the anti-glare layer can be improved, which is preferable. The thickness of the permeable layer is preferably in the range from 0.2 to 3 $\mu$m, more preferably from 0.5 to 2 $\mu$m. For example, when the translucent base is triacetylcellulose, and the resin contained in the anti-glare layer is an acrylic resin, the permeable layer can be formed. The permeable layer can be checked, and the thickness thereof can be measured, by observing a cross section of the anti-glare film using a transmission electron microscope (TEM), for example.

Even when the anti-glare film according to the present invention is applied to such anti-glare film including a permeable layer, desired surface asperities with gradual convex portions, both having anti-glare properties and preventing white blur from occurring can be easily formed. When the translucent base has poor adhesion with the anti-glare layer, it is preferred that the permeable layer is formed so as to be thick in order to improve the adhesion.

FIG. 9A schematically shows a configuration of an example of the anti-glare film according to the present invention. As shown in the schematic view of FIG. 9A, particles 12 and thixotropy-imparting agents 13 are flocculated in an anti-glare layer 11, so that convex portions 14 are formed on the surface of the anti-glare layer 11. The flocculation state of the particles 12 and the thixotropy-imparting agents 13 is not particularly limited, and the thixotropy-imparting agents 13 are prone to be present at least around the particles 12. In flocculated portions forming the convex portions 14, particles 12 are present in the state of being gathered in an in-plane direction of the anti-glare layer 11. Thus, the convex portions 14 become gradual convex portions. In contrast, in the case where the anti-glare layer contains no thixotropy-imparting agent, as shown in the schematic view of FIG. 9B, particles 12 are flocculated not only in the in-plane direction but also in the thickness direction of the anti-glare layer 11 in the anti-glare layer 11 to form convex portions 14a and 14b. The convex portions 14a and 14b are formed on the surface of the anti-glare layer 11 by the flocculation of the particles 12 in the in-plane direction and the thickness direction, so that a defect in outward appearance and white blur are prone to occur.

It is assumed that the above-mentioned gradual convex portions are formed by the following mechanism. The present invention, however, is not at all limited by this assumption. The following assumption is described with reference to an example of the case of forming an anti-glare layer through forming a coating layer by coating the anti-glare layer-forming material containing a solvent on a translucent base.

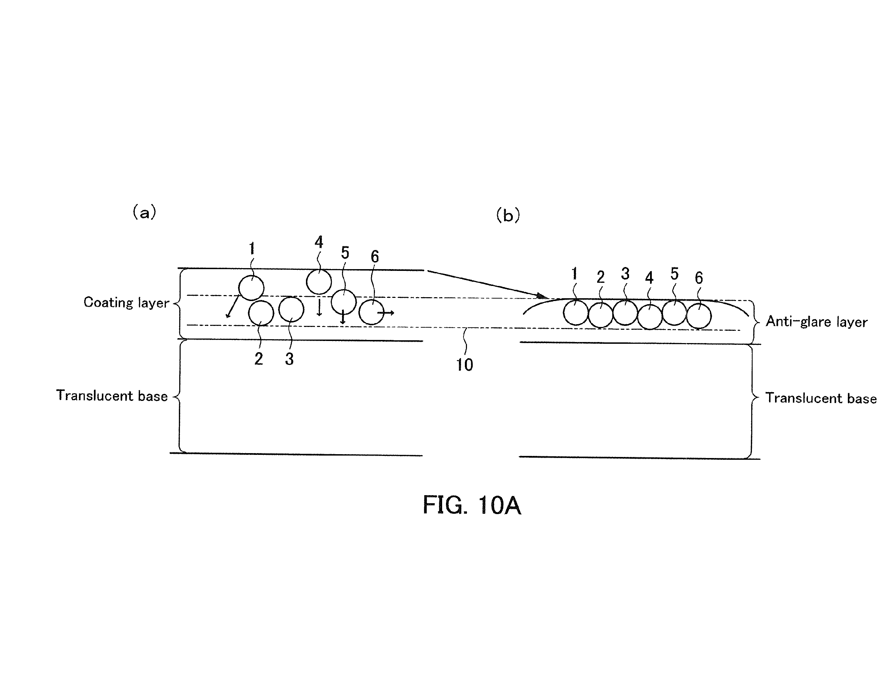

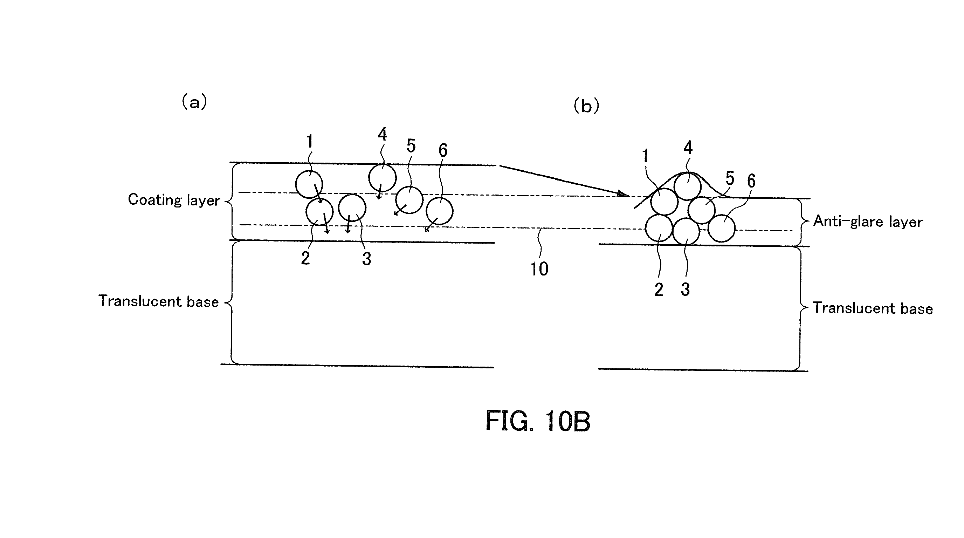

FIG. 10A is a diagram schematically showing the state of a cross section in the thickness direction of the anti-glare film according to the present invention, viewed from a side surface in order to illustrate a mechanism of the flocculation state in the anti-glare layer of the anti-glare film according to the present invention. FIG. 10B is a diagram schematically showing a flocculation state of particles, which is different from the present invention. In FIGs. 10A and 10B, (a) shows the state of forming a coating layer by coating or the like the anti-glare layer-forming material (coating solution) containing a solvent to a translucent base, and (b) shows the state of the anti-glare layer formed by removing the solvent from the coating layer.

An anti-glare layer is formed using an anti-glare layer-forming material containing a resin, particles, and thixotropy-imparting agents in FIG. 10A. In contrast, an anti-glare layer-forming material contains no thixotropy-imparting agent in FIG. 10B. In FIG. 10A, the thixotropy-imparting agents are not shown to make the diagram more readable.

The mechanism of forming the above-mentioned gradual convex portions is described below with reference to FIG. 10A. As shown in (a) and (b) of FIG. 10A, the thickness of the coating layer is shrunk (reduced) by removing the solvent contained in the coating layer. The lower surface side (back surface side) of the coating layer is terminated by the translucent base, and thus the coating layer is shrunk from the upper surface side (the front surface side) of the coating layer. Particles (e.g., particles 1, 4, and 5) present in a portion from which the thickness of the coating layer is reduced in (a) of FIG. 10A are prone to move to the lower surface side of the coating layer by the reduction in thickness. On the other hand, a movement, to the lower surface side, of particles (e.g., particles 2, 3, and 6) present in a position relatively lower on the lower surface side, which is not affected or is less prone to be affected by the change in the thickness is suppressed by an anti-settling effect (thixotropic effect) of the thixotropy-imparting agents contained in the anti-glare layer-forming material (e.g., the particles do not move to the side lower than the double-dashed chain line 10). Therefore, even when the coating layer is shrunk, the particles (particles 2, 3, and 6) on the lower surface side remain in almost the same position without being pushed toward the lower side (back surface side) by the particles (particles 1, 4, and 5) moving from the front surface side. Since the particles (particles 2, 3, and 6) on the lower surface side remain in almost the same position, the particles (particles 1, 4, and 5) moving from the front surface side move to positions beside the particles on the lower surface side (in an in-plane direction of the coating layer) in which the particles on the lower surface side are not present. It is assumed that the particles in the anti-glare layer of the anti-glare film according to the present invention are present in the state of gathering in an in-plane direction of the anti-glare layer as described above.

Since the particles in the anti-glare layer are flocculated in an in-plane direction of the anti-glare layer as described above, the convex portions become gradual convex portions as shown in (b) of FIG. 10A. Moreover, when the anti-glare layer contains thixotropy-imparting agents having an anti-settling effect, the excess flocculation of the particles in the thickness direction of the anti-glare layer is avoided. Thus, formation of a projection as a defect in outward appearance of the surface of the anti-glare layer can be prevented.

In contrast, in the case where the anti-glare layer-forming material contains no thixotropy-imparting agent, the anti-settling effect of the thixotropy-imparting agents is not exerted on the particles. Thus, by the shrinkage of the thickness, particles (particles 2, 3, and 6) on the lower surface side are settled and gathered to the translucent base surface side, together with the other particles (particles 1, 4, and 5) on the upper surface side as shown in (a) of FIG. 10B (for example, particles move and are gathered on the lower surface side of a chain double-dashed line 10), for example. Thus, as shown in (b) of FIG. 10B, portions of excessively flocculating the particles in the thickness direction of the anti-glare layer are generated in some cases. Then, it is assumed that the portions become projections as defects in outward appearance on the surface of the anti-glare layer.

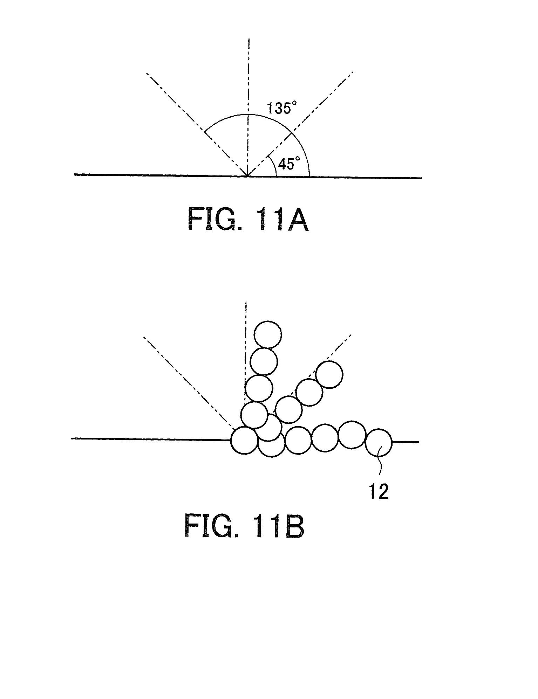

As long as the convex portions in the anti-glare film according to the present invention are gradual convex portions which can prevent generation of the projection as a defect in outward appearance on the surface of the anti-glare layer, some of the particles may be present in positions in which the particles directly or indirectly overlap in the thickness direction of the anti-glare layer, for example. In the case where the overlap of the particles is represented by the number of overlapping particles, the "thickness direction" of the anti-glare layer is, for example, as shown in the schematic views of FIG. 11A and 11B, a direction in a range from 45° to 135° of an angle with the in-plane direction of the translucent base (in-plane direction of the anti-glare layer). When the thickness (d) of the antiglare layer is in the range from 3 to 12 $\mu$m, the particle size (D) of the particles is in the range from 2.5 to 10 $\mu$m, and a relationship between the thickness (d) and the particle size (D) is $0.3 \leq D/d \leq 0.9$, the number of overlapping particles in the thickness direction of the anti-glare layer is preferably 4 or less, more preferably 3 or less, for example.

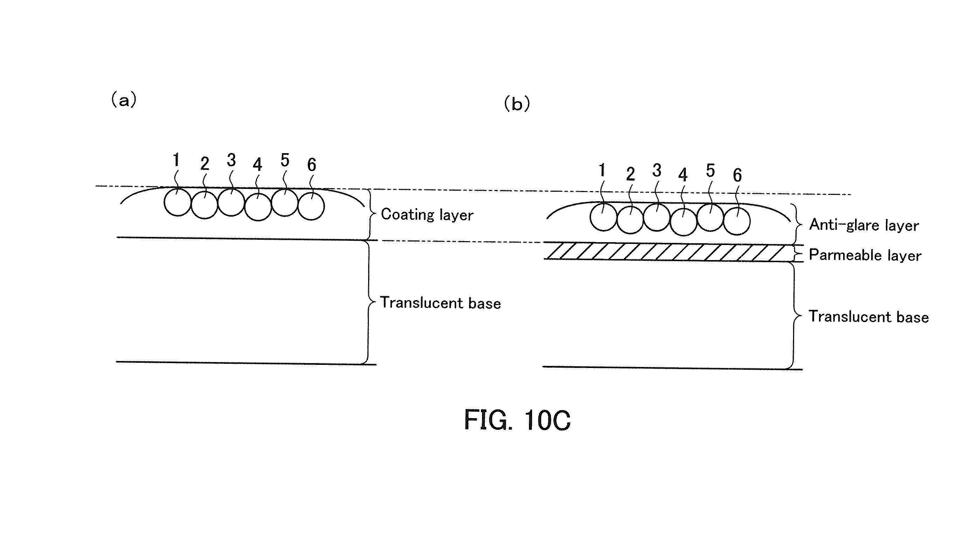

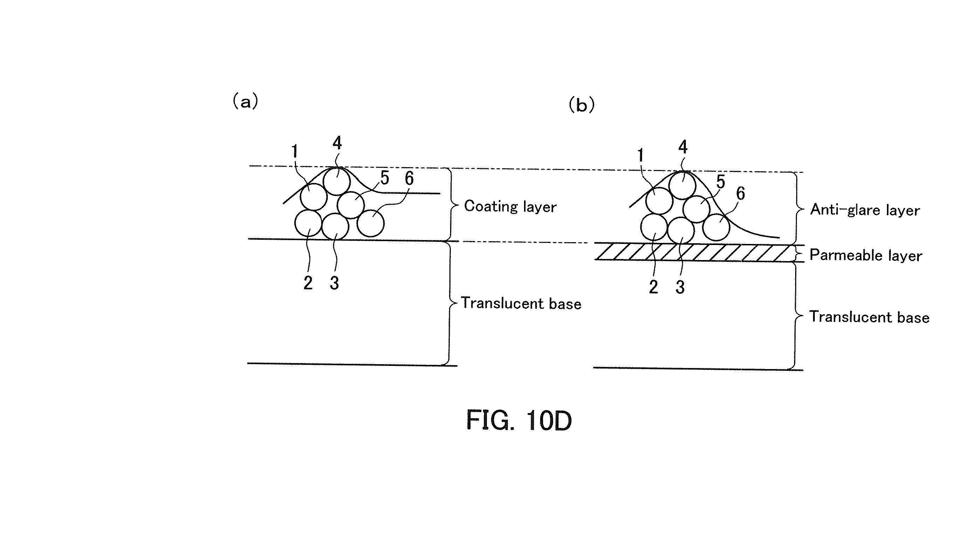

Next, the case where the above-mentioned permeable layer is formed between the translucent base and the anti-glare layer in the above-mentioned assumable mechanism is described with reference to the diagrams of FIGs. 10C and 10D. FIG. 10C is a diagram with respect to the anti-glare film according to the present invention as in the case of illustrating with reference to FIG. 10A. FIG. 10D is a diagram with respect to an anti-glare film which is different from the present invention as in the case of illustrating with reference to FIG. 10B. In FIGs. 10C and 10D, (a) shows the state of the middle of forming an anti-glare layer by removing a solvent from a coating layer, and (b) shows the state of the anti-glare layer formed by removing a solvent from a coating layer. In FIGs. 10C and 10D, the permeable layer is indicated by oblique hatching. Note here that the present invention is not at all limited by the following description.

The anti-glare film according to the present invention is described with reference to FIG. 10C. As shown in (a) and (b) of FIG. 10C, the thickness of a coating layer is shrunk (reduced) by removing a solvent contained in the coating layer. Thus, an anti-glare layer is formed. Then, a resin contained in an anti-glare layer-forming material is permeated through a translucent base with the formation of the anti-glare layer. Thus, a permeable layer is formed between the anti-glare layer and the translucent base. As shown in (a) of FIG. 10C, before the permeable layer is formed, the particles are prone to be present in the state of being apart from the translucent base without being in contact with the translucent base by the anti-settling effect of the thixotropy-imparting agents. Then, when the permeable layer is formed, the resin on the translucent base side, i.e., the resin on the lower side of the particles (translucent base side) is mainly permeated through the permeable layer. Thus, in the present invention, following the permeation of the resin through the translucent base, a group of particles flocculated in the in-plane direction of the anti-glare layer and the resin covering them move together to the translucent base side. That is, they move to the translucent base side as shown in (b) of FIG. 10C while maintaining the flocculation state of the particles shown in (a) of FIG. 10C. Thus, the group of particles and the resin covering them on the front surface side of the anti-glare layer move as if falling down to the translucent base side as a whole while maintaining the surface profile. Thus, it is assumed that the surface profile of the anti-glare layer of the anti-glare film according to the present invention is less prone to change.

Moreover, the resin has thixotropy (thixotropic properties) due to the thixotropy-imparting agents in the present invention. Thus, it is assumed that the resin composing a convex portion by covering a group of particles is less prone to move to the transparent base side even when a thick permeable layer is formed. Combined with such effect, it is assumed that the surface profile of the anti-glare layer is less prone to change in the anti-glare film according to the present invention.

As described above, it is assumed that the surface profile of the anti-glare layer is less prone to change in the present invention by a synergistic effect of a positional relationship between the particles in the thickness direction of the anti-glare layer and the translucent base and thixotropic properties of the thixotropy-imparting agents even if the anti-glare film includes a permeable layer.

The case of an anti-glare film containing no thixotropy-imparting agent, which is different from the present invention, is described with reference to FIG. 10D. When the anti-glare layer-forming material contains no thixotropy-imparting agent, the anti-settling effect of the thixotropy-imparting agent is not exerted on the particles as mentioned above. Thus, as shown in (a) of FIG. 10D, the particles are prone to be present in positions of being in contact with the translucent base. Furthermore, the particles cannot move to a permeable layer formed by permeating the resin through the translucent base. Therefore, when the permeable layer is formed, a group of particles shown in (a) of FIG. 10D remains in the position in the state of being in contact with the translucent base, and only the resin around the group of particles is permeated through the translucent base. Thus, it is assumed that the amount of the resin on the surface of the anti-glare layer is reduced relative to the group of particles remaining in the position as shown in (b) of FIG. 10D, so that the surface profile of the anti-glare layer is prone to change, and it makes the projections as defects in outward appearance on the surface of the anti-glare layer further conspicuous.

It is preferred that in the anti-glare layer of the anti-glare film according to the present invention, the number of defects in outward appearance having the maximum diameter of 200 $\mu$m or more is 1 or less per 1 m$^2$ of the anti-glare layer. It is more preferred that the anti-glare film does not have any defect in outward appearance.

The haze value of the anti-glare film according to the present invention is preferably in the range from 0% to 10%. The haze value is a haze value (cloudiness) of the entire anti-glare film according to JIS K 7136 (2000 version). The haze value is more preferably from 0% to 5%, yet more preferably from 0% to 3%. In order to make the haze value be in the above-described range, it is preferred that the particles and the resin are selected so that the difference in refractive index between the particles and the resin is in the range from 0.001 to 0.02. When the haze value is in the above-described range, a sharp image can be obtained, and a contrast in dark place can be improved.

The arithmetic average surface roughness Ra defined in JIS B 0601 (1994 version) of the surface asperities of the anti-glare layer of the anti-glare film according to the present invention is preferably in the range from 0.02 to 0.3 $\mu$m, more preferably from 0.03 to 0.2 $\mu$m. In order to prevent reflected glare of external light and an image from occurring on the surface of the anti-glare film, the surface preferably has roughness to some extent. When Ra is 0.02 $\mu$m or more, the reflected glare can be ameliorated. When Ra is in the above-described range, scattering of reflected light when viewed from oblique directions is suppressed, white blur can be ameliorated, and a contrast in bright place can be improved in the case of using the anti-glare layer in an image display or the like.

The average convex-to-convex distance Sm (mm) of the surface asperities, measured according to JIS B 0601 (1994 version) is preferably in the range from 0.05 to 0.4, more preferably from 0.05 to 0.3, yet more preferably from 0.08 to 0.3, most preferably from 0.8 to 0.25. When Sm is in the above-described range, the anti-glare film can have further superior anti-glare properties and can prevent white blur from occurring, for example.

The average tilt angle $\theta$a (°) of the surface asperities of the anti-glare layer of the anti-glare film is preferably in the range from 0.1 to 1.5, more preferably from 0.2 to 1.0. The average tilt angle $\theta$a is a value defined by the following mathematical equation (1). The average tilt angle $\theta$a is a value measured by the method described below in the section of Examples, for example.

$$\text{Average tilt angle } \theta a = \tan^{-1}\Delta a \qquad (1)$$

In the mathematical equation (1), as shown in the following mathematical equation (2), $\Delta$a denotes a value obtained by dividing the sum (h1 + h2 + h3 · · · + hn) of the differences (heights h) between adjacent peaks and the lowest point of the trough formed therebetween by the standard length L of the roughness curve defined in JIS B 0601 (1994 version). The roughness curve is a curve obtained by removing the surface waviness components with longer wavelengths than the predetermined one from the profile curve using a retardation compensation high-pass filter. The profile curve denotes a profile that appears at the cut surface when an object surface was cut in a plane perpendicular to the object surface.

$$\Delta a = (h1 + h2 + h3 \cdots + hn)/L \qquad (2)$$

When all of Ra, Sm, and $\theta$a are in the above described ranges, the anti-glare film can have further superior anti-glare properties and can prevent white blur from occurring.

When the anti-glare layer is formed, it is preferred that the anti-glare layer-forming material (coating solution) exerts thixotropic properties, and the Ti value thereof defined by the following equation is preferably in the range from 1.3 to 3.5, more preferably from 1.3 to 2.8.

$$Ti\ value = \beta1/\beta2$$

In the equation, $\beta1$ represents a viscosity measured at a shear velocity of 20 (1/s) using RHEOSTRESS 6000 manufactured by HAAKE, and $\beta2$ represents a viscosity measured at a shear velocity of 200 (1/s) using RHEOSTRESS 6000 manufactured by HAAKE.

When the Ti value is less than 1.3, a defect in outward appearance is prone to occur, and characteristics of anti-glare properties and white blur are deteriorated. When the Ti value exceeds 3.5, the particles are prone to be in the dispersed state in which the particles are difficult to be flocculated, and thus the anti-glare film according to the present invention is difficult to be obtained.

The method for producing an anti-glare film according to the present invention is not particularly limited, and an anti-glare film can be produced by any method and may be produced by a method for producing an anti-glare film according to the present invention, for example. The anti-glare film produced by the method for producing an anti-glare film according to the present invention preferably has the same characteristics as in the anti-glare film according to the present invention. The anti-glare film according to the present invention can be produced specifically through forming an anti-glare layer by providing an anti-glare layer-forming material (coating solution) containing the resin, the particles, the thixotropy-imparting agents, and a solvent, coating the anti-glare layer-forming material (coating solution) on at least one surface of the translucent base such as a transparent plastic film base to form a coating layer, and curing the coating layer, for example. In production of the anti-glare film according to the present invention, methods for imparting asperities by an appropriate method such as a transfer method using a die, sandblasting, and emboss rolling can be used in combination.

The solvent is not particularly limited, and various solvents can be used. The solvents may be used alone or in a combination of two or more of them. There are optimal kinds of solvents and optimal ratio thereof according to the composition of the resin, the kinds of the particles and the thixotropy-imparting agents, and the contents thereof in order to obtain the anti-glare film according to the present invention. The solvent is not particularly limited, and examples thereof include alcohols such as methanol, ethanol, isopropyl alcohol, butanol, and 2-methoxyethanol; ketones such as acetone, methylethylketone, methylisobutylketone, and cyclopentanone; esters such as methyl acetate, ethyl acetate, and butyl acetate; ethers such as diisopropyl ether and propyleneglycol monomethylether; glycols such as ethyleneglycol and propyleneglycol; cellosolves such as ethyl cellosolve and butyl cellosolve; aliphatic hydrocarbons such as hexane, heptane, and octane; and aromatic hydrocarbons such as benzene, toluene, and xylene.

In the case where triacetylcellulose (TAC) is employed as a translucent base, and a permeable layer is formed, a good solvent to TAC can be suitably used, for example. Examples of the solvent include ethyl acetate, methyl ethyl ketone, and cyclopentanone.

Thixotropic properties caused by thixotropy-imparting agents can be favorably exerted in the anti-glare layer-forming material (coating solution) by selecting a solvent as appropriate. For example, in the case of using organoclay, toluene and xylene can be suitably used alone or in combination. For example, in the case of using oxidized polyolefin, methyl ethyl ketone, ethyl acetate, and propylene glycol monomethyl ether can be suitably used alone or in combination. For example, in the case of using denatured urea, butyl acetate and methyl isobutyl ketone can be suitably used alone or in combination.

Various leveling agents can be added to the anti-glare layer-forming material. For the purpose of preventing unevenness in coating (causing a surface to be evenly coated), a fluorine-based leveling agent or a silicone-based leveling agent can be used as the leveling agent, for example. In the present invention, a leveling agent can be selected as appropriate according to the case where the surface of the anti-glare layer is required to have anti-smudge properties, the case where an antireflection layer (low refractive index layer) or a layer containing interlayer fillers is formed on the anti-glare layer as mentioned below, and the like. In the present invention, for example, the coating solution can have thixotropic properties by causing the coating solution to contain thixotropy-imparting agents. Thus, the unevenness in coating is less prone to occur. Therefore, for example, the present invention has an advantage of widening the choice of the leveling agents.

The amount of the leveling agent to be added is, for example, 5 parts by weight or less, preferably in the range from 0.01 to 5 parts by weight, relative to 100 parts by weight of the resin.

A pigment, a filler, a dispersant, a plasticizer, a UV absorber, a surfactant, an anti-smudge agent, an antioxidant, or the like may be added to the anti-glare layer-forming material to the extent that the functions of the anti-glare layer-forming material are not impaired. These additives may be used alone or in a combination of two or more of them.

Any of conventionally known photoinitiators described in JP 2008-88309 A can be used in the anti-glare layer-forming material, for example.

As a method for coating the anti-glare layer-forming material on the translucent base such as a transparent plastic film base, any of coating methods such as a fountain coating method, a die coating method, a spin coating method, a spray coating method, a gravure coating method, a roller coating method, a bar coating method, and the like can be used, for example.

The anti-glare layer-forming material is coated on the translucent base such as a transparent plastic film base to form a coating layer, and the coating layer is cured. It is preferred that the coating layer is dried prior to the curing. The drying may be, for example, natural drying, air drying by blowing air, heat drying, or a combination thereof.

The way of curing a coating layer of the anti-glare layer-forming material is not particularly limited and is preferably ultraviolet curing. The amount of irradiation with the energy radiation source is preferably from 50 to 500 $mJ/cm^2$ in terms of accumulative exposure at the ultraviolet wavelength of 365 nm. With the amount of irradiation of at least 50 $mJ/cm^2$, the coating layer is more sufficiently cured, and the resultant anti-glare layer has a more sufficient hardness. Moreover, with the amount of irradiation of 500 $mJ/cm^2$ or less, the resultant anti-glare layer can be prevented from being colored.

By forming the anti-glare layer on at least one surface of the translucent base such as a transparent plastic film base as described above, the anti-glare film according to the present invention can be produced. The anti-glare film according to the present invention may be manufactured by a method other than the above-mentioned method. It is preferred that the anti-glare film according to the present invention has a hardness of 2H or more in terms of pencil hardness although it is influenced by the thickness of the layer.

The anti-glare film according to the present invention can be, for example, an anti-glare film obtained by forming an anti-glare layer on one surface of a transparent plastic film base. The anti-glare layer contains particles, and, thus, the anti-glare layer has surface asperities. Even though the anti-glare layer is formed on one surface of the transparent plastic film base in this example, the present invention is not limited by this. The anti-glare film may be an anti-glare film obtained by forming anti-glare layers on both surfaces of the transparent plastic film base. Even though the anti-glare layer is a monolayer in this example, the present invention is not limited by this. The anti-glare layer may have a multilayer structure obtained by laminating two or more layers.

In the anti-glare film according to the present invention, an antireflection layer (low refractive index layer) may be placed on the anti-glare layer. For example, in the case where the anti-glare film is attached to an image display, a light reflection at the interface between air and the anti-glare layer is one of the factors of reducing visibility of images. The antireflection layer reduces the surface reflection. The anti-glare layer and the antireflection layer may be formed on each of both surfaces of the transparent plastic film base. Furthermore, each of the anti-glare layer and the antireflection layer may have a multilayer structure obtained by laminating two or more layers.

In the present invention, the antireflection layer is a thin optical film whose thickness and refractive index are controlled strictly or a laminate including two or more of the thin optical films. The antireflection layer uses the interference effect of light to cancel opposite phases of incident light and reflected light and thereby exhibits an antireflection function. The wavelength range of visible light that allows the antireflection function to be exhibited is, for example, from 380 to 780 nm, the wavelength range in which particularly high visibility is obtained is in the range of 450 to 650 nm, and preferably, the antireflection layer is designed so that the reflectance at 550 nm, which is the center wavelength, is minimized.

When the antireflection layer is designed based on the effect of interference of light, the interference effect can be enhanced by, for example, a method of increasing the difference in refractive index between the antireflection layer and the anti-glare layer. Generally, in an antireflection multilayer having a structure including two to five thin optical layers (each with strictly controlled thickness and refractive index) that are laminated together, components with different refractive indices from each other are used to form a plurality of layers with a predetermined thickness. Thus, the antireflection layer can be designed at a higher degree of freedom, the antireflection effect can be improved, and the spectral reflection characteristics also can be made uniform (flat) in the visible light range. Since each layer of the thin optical film must be highly precise in thickness, a dry process such as vacuum deposition, sputtering, or CVD is generally used to form each layer.

Further, it is preferred that a contamination preventive film formed of a silane compound having a fluorine group, an organic compound having a fluorine group, or the like is laminated on the antireflection layer in order to prevent adhesion of contaminant and improve removability of adherent contaminant.

In the anti-glare film and the method for producing the same, according to the present invention, it is preferred that at least one of the translucent base such as the transparent plastic film base and the anti-glare layer is subjected to a surface treatment. When the transparent plastic film base is subjected to a surface treatment, adhesion to the anti-glare layer, a polarizer or a polarizing plate can be further improved. When the anti-glare layer is subjected to a surface treatment, adhesion to the antireflection layer, a polarizer or a polarizing plate can be further improved.

In the anti-glare film in which the anti-glare layer is formed on one surface of the translucent base such as the transparent plastic film base and the method for producing the same, the other surface of the translucent base may be subjected to a solvent treatment in order to prevent the film from warping. Alternatively, in the anti-glare film in which the anti-glare layer is formed on one surface of the transparent plastic film base and the method for producing the same, a transparent resin layer may be formed on the other surface of the translucent base in order to prevent the film from

EP 2 725 393 A1

warping.

The translucent base side such as the transparent plastic film base side of the anti-glare film according to the present invention can be attached to an optical element used in LCD via a pressure-sensitive adhesive or an adhesive. In order to perform the attachment, the translucent base may be subjected to any of the above-mentioned surface treatments.

The optical element can be, for example, a polarizer or a polarizing plate, for example. The polarizing plate is generally configured so that one or both surfaces of the polarizer has a transparent protective film. When a transparent protective film is provided on both surfaces of the polarizer, the front and back transparent protective films may be formed of the same material or different materials. Polarizing plates are generally placed on both sides of a liquid crystal cell and is placed so that the absorption axes of two polarizing plates are substantially orthogonal to each other.

Next, an optical element including the anti-glare film according to the present invention laminated therein is described using a polarizing plate as an example. By laminating the anti-glare film according to the present invention on a polarizer or a polarizing plate with an adhesive or a pressure-sensitive adhesive, a polarizing plate having functions of the present invention can be obtained.

The polarizer is not particularly limited and various kinds can be used. Examples of the polarizer include a film that is uniaxially stretched after a hydrophilic polymer film, such as a polyvinyl alcohol type film, a partially formalized polyvinyl alcohol type film, or an ethylene-vinyl acetate copolymer type partially saponified film, is allowed to adsorb dichromatic substances such as iodine or a dichromatic dye; and a polyene type oriented film, such as a dehydrated polyvinyl alcohol film or a dehydrochlorinated polyvinyl chloride film.

Preferably, the transparent protective film formed on one or both surfaces of the polarizer is superior in, for example, transparency, mechanical strength, thermal stability, moisture-blocking properties, and retardation value stability. Examples of the material for forming the transparent protective film include the same materials as those used for the aforementioned transparent plastic film base.

Moreover, the polymer films described in JP 2001-343529 A (WO 01/37007) also can be used as the transparent protective film. The polymer film can be manufactured by extruding the resin composition in the form of a film. The polymer film has a small retardation and a small photoelastic coefficient and thus can eliminate defects such as unevenness due to distortion when it is used for a protective film of, for example, a polarizing plate. The polymer film also has low moisture permeability and thus has high durability against moisture.

From the viewpoints of polarizing characteristics and durability, the transparent protective film is preferably a film made of cellulose resin such as triacetyl cellulose or a film made of norbornene resin. Examples of commercially available products of the transparent protective film include FUJITAC (trade name) (manufactured by Fujifilm Corporation), ZEONOA (trade name) (manufactured by Nippon Zeon Co., Ltd.), and ARTON (trade name) (manufactured by JSR Corporation). The thickness of the transparent protective film is not particularly limited. It can be, for example, in the range of 1 to 500 $\mu$m from the viewpoints of strength, workability such as handling properties, and thin layer properties.

The configuration of the polarizing plate on which the anti-glare film has been laminated is not particularly limited and may be, for example, a configuration obtained by laminating a transparent protective film, the polarizer, and the transparent protective film on the anti-glare film in this order or a configuration obtained by laminating the polarizer and the transparent protective film on the anti-glare film in this order.

The configuration of the image display according to the present invention is the same as that of the conventional image display except that the anti-glare film according to the present invention is used. For example, in the case of a LCD, the image display can be manufactured by incorporating a driving circuit through appropriately assembling components such as a liquid crystal cell, an optical element such as a polarizing plate, and if necessary, a lighting system (backlight or the like).

The image display according to the present invention may be used for any suitable applications. Examples of the applications include office automation equipment such as a PC monitor, a notebook PC, and a copy machine, portable devices such as a mobile phone, a watch, a digital camera, a personal digital assistant (PDA), and a handheld game machine, home electric appliances such as a video camera, a television set, and a microwave oven, vehicle equipment such as a back monitor, a monitor for a car-navigation system, and a car audio device, display equipment such as an information monitor for stores, security equipment such as a surveillance monitor, and nursing and medical equipment such as a monitor for nursing care and a monitor for medical use.

Examples

Next, the examples of the present invention are described together with the comparative examples. The present invention, however, is not limited by the examples and the comparative examples. Various characteristics in the examples and the comparative examples were evaluated or measured by the following methods.

13

(Haze value)

A haze value was measured according to JIS K 7136 (2000 version) (haze (cloudiness)) using a haze meter ("HM-150" (trade name), manufactured by Murakami Color Research Laboratory).

(Measurement of surface profile)

A glass sheet (thickness: 1.3 mm) manufactured by Matsunami Glass Ind., Ltd. was attached to a surface of an anti-glare film on which no anti-glare layer had been formed, with a pressure-sensitive adhesive. Subsequently, the surface profile of the anti-glare layer was measured under the condition where a cutoff value was 0.8 mm using a high-precision microfigure measuring instrument (SURFCORDER ET4000 (trade name), manufactured by Kosaka Laboratory Ltd.), and the arithmetic average surface roughness Ra, the average convex-to-convex distance Sm, and the average tilt angle $\theta a$ were then determined. The high-precision microfigure measuring instrument automatically calculated the arithmetic average surface roughness Ra and the average tilt angle $\theta a$. The arithmetic average surface roughness Ra and the average tilt angle $\theta a$ were based on JIS B 0601 (1994 version). The average convex-to-convex distance Sm was an average convex-to-convex distance (mm) on the surface, measured according to JIS B 0601 (1994 version).

(Anti-glare property evaluation)

(1) A black acrylic plate (thickness: 2.0 mm, manufactured by Mitsubishi Rayon Co., Ltd.) was attached to a surface of the anti-glare film on which no anti-glare layer had been formed, with a pressure-sensitive adhesive. Thus, a sample having a back surface with no reflection was produced.
(2) In an office environment (about 1000 Lx) where displays are used in general, the sample was illuminated by a fluorescent lamp (three wavelength light source), and anti-glare properties of the sample produced above were evaluated by visual check according to the following criteria:

Evaluation criteria:

AA: Really superior anti-glare properties with no reflected glare of an image of the outline of the fluorescent lamp
A: Favorable anti-glare properties with slightly reflected glare of an image of the outline of the fluorescent lamp
B: Inferior anti-glare properties with reflected glare of an image of the outline of the fluorescent lamp
C: Almost no anti-glare properties.

(White blur evaluation)

(1) A black acrylic plate (thickness: 1.0 mm, manufactured by Nitto Jushi Kogyo Kabushiki Kaisha) was attached to the surface of an antiglare film on which no anti-glare layer had been formed, with a pressure-sensitive adhesive. Thus, a sample having a back surface with no reflection was produced.
(2) In an office environment (about 1000 Lx) where displays are used in general, the white blur phenomenon was observed by visual check by viewing the display from the direction that forms an angle of 60° with the reference (0°) that is the direction perpendicular to the plane of the sample thus produced. Then evaluation was made according to the following criteria:

Evaluation Criteria:

AA: white blur is hardly observed
A: white blur is observed but has a small effect on visibility
B: strong white blur is observed and deteriorates the visibility considerably.

(Weight-average particle size of fine particles)

By the Coulter counting method, the weight average particle size of the fine particles was measured. Specifically, a particle size distribution measurement apparatus (COULTER MULTISIZER (trade name), manufactured by Beckman Coulter, Inc.) using a pore electrical resistance method was employed to measure electrical resistance of an electrolyte corresponding to the volume of the fine particles when the fine particles passed through the pores. Thus, the number and volume of fine particles were measured and then the weight average particle size was calculated.

(Thickness of anti-glare layer)

The overall thickness of an anti-glare film was measured using a microgauge type thickness gauge manufactured by Mitutoyo Corporation, and the thickness of an anti-glare layer was calculated by subtracting the thickness of a translucent base from the overall thickness.

(Height of convex portion)

A glass plate (with a thickness of 1.3 mm) manufactured by Matsunami Glass Ind., Ltd. was bonded to a surface of an antiglare film on which no antiglare layer had been formed, with a pressure-sensitive adhesive, and a surface shape of the antiglare layer was measured using a non-contact three-dimensional surface shape meter (WYKO (product name), manufactured by Veeco Instruments Inc.) with an objective lens having 10x magnification in a measured area, 595 $\mu$m $\times$ 452 $\mu$m. Then, a two-dimensional profile of a cross section obtained by dividing a convex portion in the surface profile obtained in the region by a straight light passing through the center of the convex portion was obtained. The height from the center line (roughness mean line) to the top (of the convex portion) in the obtained two-dimensional profile was calculated as the height of the convex portion.

(Outward appearance evaluation)

1 m$^2$ of an anti-glare film was provided, which was then observed in a dark room from a distance of 30 cm by visual check using a fluorescent lamp (1000 Lx) in order to check a defect in outward appearance. The observed defect in outward appearance was observed using a graduated loupe in order to measure the size (the maximum diameter) of the defect in outward appearance and count the number of the defects with the size of 200 $\mu$m or more.

(Flocculation state evaluation)

The distribution of the particles was observed from a direction perpendicular to the surface of the anti-glare film using an optical microscope ("MX61L" manufactured by Olympus Corporation) in the semitransparent mode with a magnification of $\times$500.

(Thickness of permeable layer)

A thickness of a permeable layer formed by permeating a resin through a translucent base was measured as follows. The anti-glare film was cut in cross-section, and the cross-section was observed with a transmission electron microscope (TEM, manufactured by Hitachi, Ltd., "H-7650") at an accelerating voltage of 100 kV.

(Example 1)

As a resin contained in an anti-glare layer-forming material, 80 parts by weight of an ultraviolet-curable urethane acrylate resin (manufactured by Nippon Synthetic Chemical Industry Co., Ltd., "UV1700B" (trade name), solid content: 100%) and 20 parts by weight of polyfunctional acrylate (manufactured by Osaka Organic Chemical Industry Ltd., "BISCOAT #300" (trade name), solid content: 100%) containing pentaerythritol triacrylate as a main component were provided. 2 parts by weight of particles of a copolymer of acryl and styrene (manufactured by Sekisui Plastics Co., Ltd., "TECHPOLYMER" (trade name), weight-average particle size: 5.0 $\mu$m, refractive index: 1.520) as particles, 1.5 parts by weight of synthesized smectite which is organoclay (manufactured by CO-OP Chemical Co. Ltd., "LUCENTITE SAN" (trade name)) as the thixotropy-imparting agents, 3 parts by weight of a photoinitiator (manufactured by BASF, "IRGACURE 907" (trade name)), and 0.5 parts by weight of a leveling agent (manufactured by DIC Corporation, "PC4100" (trade name), with a solid content of 10%) were mixed relative to 100 parts by weight of the solid content of the resin. The organoclay was used after diluting it with toluene so as to have a solid content of 6.0%. This mixture thus obtained was diluted with a toluene/cyclopentanone (CPN) mixed solvent (weight ratio: 80 : 20) so as to have a solid content concentration of 40 wt%. Thus, an anti-glare layer-forming material (coating solution) was prepared. The Ti value calculated from the viscosity of the anti-glare layer-forming material (coating solution) was 2.0.

$$\text{Ti value} = \beta1/\beta2$$

In the equation, $\beta1$ represents a viscosity measured at a shear velocity of 20 (1/s) using RheoStress 6000 manufactured by HAAKE, and $\beta2$ represents a viscosity measured at a shear velocity of 200 (1/s) using RheoStress 6000 manufactured by HAAKE.

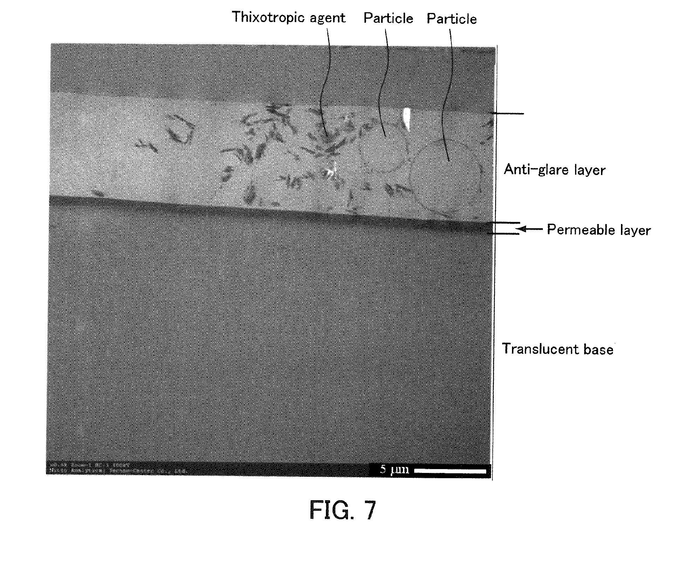

A transparent plastic film base (triacetylcellulose film, manufactured by Fujifilm Corporation, trade name "FU-JITAC, thickness: 60 $\mu$m, refractive index: 1.49) was provided as a translucent base. The anti-glare layer-forming material (coating solution) was applied on one surface of the transparent plastic film base with a comma coater to form a coating layer. Then, the transparent plastic film base including this coating layer thereon was transferred to a drying step while tilting it about 30°. In the drying step, the transparent plastic film base was heated at 90°C for 2 minutes so as to dry the coating layer. Thereafter, it was irradiated with ultraviolet at an accumulated light intensity of 300 mJ/cm$^2$ using a high pressure mercury lamp to subject the coating layer to a hardening treatment. Thus, an anti-glare layer with a thickness of 7.5 $\mu$m was formed. Thus, an anti-glare film of Example 1 was obtained. A cross section of the obtained anti-glare film was observed with TEM to measure a thickness of a permeable layer. A TEM photograph is shown in FIG. 7. The thickness of the permeable layer in the anti-glare film was 1 $\mu$m.

(Example 2)

An anti-glare film of Example 2 was obtained in the same manner as in Example 1 except that as the particles, particles of a copolymer of acryl and styrene (manufactured by Sekisui Plastics Co., Ltd., trade name: "TECHPOLYMER", weight average particle size: 3.0 $\mu$m, refractive index: 1.52) was used. The Ti value of the anti-glare layer-forming material (coating solution) was 2.0, and the thickness of a permeable layer in the anti-glare film was 1 $\mu$m.

(Example 3)

An anti-glare film of Example 3 was obtained in the same manner as in Example 1 except that as the particles, particles of a copolymer of acryl and styrene (manufactured by Sekisui Plastics Co., Ltd., trade name: "TECHPOLYMER", weight average particle size: 6.0 $\mu$m, refractive index: 1.52) was used. The Ti value of the anti-glare layer-forming material (coating solution) was 2.0, and the thickness of a permeable layer in the anti-glare film was 1 $\mu$m.

(Example 4)

An anti-glare film of Example 4 was obtained in the same manner as in Example 1 except that an anti-glare layer-forming material (coating solution) was prepared by diluting a mixture prepared in the same manner as in Example 1 so as to have a solid content concentration of 35 wt%. The Ti value of the anti-glare layer-forming material (coating solution) was 2.0, and the thickness of a permeable layer in the anti-glare film was 1 $\mu$m.

(Example 5)

An anti-glare film of Example 5 was obtained in the same manner as in Example 1 except that as the particles, particles of a copolymer of acryl and styrene (manufactured by Sekisui Plastics Co., Ltd., trade name: "TECHPOLYMER", weight average particle size: 1.5 $\mu$m, refractive index: 1.52) was used. The Ti value of the anti-glare layer-forming material (coating solution) was 2.0, and the thickness of a permeable layer in the anti-glare film was 1 $\mu$m.

(Example 6)

An anti-glare film of Example 6 was obtained in the same manner as in Example 1 except that an anti-glare layer-forming material (coating solution) was prepared by diluting a mixture prepared using 4.0 parts by weight of oxidized polyolefin (manufactured by Kusumoto Chemicals, Ltd., trade name "DISPARON 4200-20") as the thixotropy-imparting agents with a propyleneglycol monomethyl ether (PM)/CPN mixed solvent (weight ratio: 80 : 20) so as to have a solid content concentration of 32 wt%. The oxidized polyolefin was PM and used after diluting it so as to have a solid content of 6%. The Ti value of the anti-glare layer-forming material (coating solution) was 1.7, and the thickness of a permeable layer in the anti-glare film was 1 $\mu$m.

(Example 7)

An anti-glare film of Example 7 was obtained in the same manner as in Example 1 except that an anti-glare layer-forming material (coating solution) was prepared by diluting a mixture prepared using 0.5 parts by weight of denatured urea (manufactured by BYK-Chemie Corporation, trade name "BYK410") as the thixotropy-imparting agents with a methyl isobutyl ketone (MIBK)/CPN mixed solvent (weight ratio: 80 : 20) so as to have a solid content concentration of 45 wt%. The denatured urea was MIBK and used after diluting it so as to have a solid content of 6%. The Ti value of the anti-glare layer-forming material (coating solution) was 1.8, and the thickness of a permeable layer in the anti-glare film was 1 $\mu$m.

(Example 8)

An anti-glare film of Example 8 was obtained in the same manner as in Example 1 except that an anti-glare layer-forming material (coating solution) was prepared by diluting a mixture prepared using 0.4 parts by weight of the organoclay relative to 100 parts by weight of a solid content of the resin so as to have a solid content concentration of 37 wt%. The Ti value of the anti-glare layer-forming material (coating solution) was 1.3, and the thickness of a permeable layer in the anti-glare film was 1 $\mu$m.

(Example 9)

An anti-glare film of Example 9 was obtained in the same manner as in Example 8 except that 1.4 parts by weight of the organoclay was mixed relative to 100 parts by weight of a solid content of the resin. The Ti value of the anti-glare layer-forming material (coating solution) was 1.8, and the thickness of a permeable layer in the anti-glare film was 1 $\mu$m.

(Example 10)

An anti-glare film of Example 10 was obtained in the same manner as in Example 8 except that 1.5 parts by weight of the organoclay was mixed relative to 100 parts by weight of a solid content of the resin. The Ti value of the anti-glare layer-forming material (coating solution) was 1.9, and the thickness of a permeable layer in the anti-glare film was 1 $\mu$m.

(Example 11)

An anti-glare film of Example 11 was obtained in the same manner as in Example 8 except that 1.7 parts by weight of the organoclay was mixed relative to 100 parts by weight of a solid content of the resin. The Ti value of the anti-glare layer-forming material (coating solution) was 2.1, and the thickness of a permeable layer in the anti-glare film was 1 $\mu$m.

(Example 12)

An anti-glare film of Example 12 was obtained in the same manner as in Example 8 except that 2.0 parts by weight of the organoclay was mixed relative to 100 parts by weight of a solid content of the resin. The Ti value of the anti-glare layer-forming material (coating solution) was 2.3, and the thickness of a permeable layer in the anti-glare film was 1 $\mu$m.

(Example 13)

An anti-glare film of Example 13 was obtained in the same manner as in Example 8 except that 2.5 parts by weight of the organoclay was mixed relative to 100 parts by weight of a solid content of the resin. The Ti value of the anti-glare layer-forming material (coating solution) was 2.6, and the thickness of a permeable layer in the anti-glare film was 1 $\mu$m.

(Example 14)

An anti-glare film of Example 14 was obtained in the same manner as in Example 8 except that 3.2 parts by weight of the organoclay was mixed relative to 100 parts by weight of a solid content of the resin. The Ti value of the anti-glare layer-forming material (coating solution) was 3.0, and the thickness of a permeable layer in the anti-glare film

was 1 μm.

(Comparative Example 1)

An anti-glare film of Comparative Example 1 was obtained in the same manner as in Example 1 except that organoclay was not added. The Ti value of the anti-glare layer-forming material (coating solution) was 1.2, and the thickness of a permeable layer in the anti-glare film was 1 μm.

(Comparative Example 2)

An anti-glare film of Comparative Example 2 was obtained in the same manner as in Comparative Example 1 except that an anti-glare layer-forming material (coating solution) was prepared by diluting a mixture prepared in the same manner as in Comparative Example 1 so as to have a solid content concentration of 37 wt%. The Ti value of the anti-glare layer-forming material (coating solution) was 1.2, and the thickness of a permeable layer in the anti-glare film was 1 μm.

(Comparative Example 3)

An anti-glare film of Comparative Example 3 was obtained in the same manner as in Comparative Example 1 except that 8 parts by weight of the particles was mixed relative to 100 parts by weight of a solid content of the resin. The Ti value of the anti-glare layer-forming material (coating solution) was 1.2, and the thickness of a permeable layer in the anti-glare film was 1 μm.

(Comparative Example 4)

An anti-glare film of Comparative Example 4 was obtained in the same manner as in Comparative Example 1 except that an anti-glare layer-forming material (coating solution) was prepared by diluting a mixture prepared using 7 parts by weight of particles of a copolymer of acryl and styrene (manufactured by Sekisui Plastics Co., Ltd., trade name: "TECHPOLYMER", weight average particle size: 3.0 μm, refractive index: 1.52) as the particles relative to 100 parts by weight of a solid content of the resin with a PM/CPN mixed solvent (weight ratio: 9 : 1) so as to have a solid content concentration of 37 wt%. The Ti value of the anti-glare layer-forming material (coating solution) was 1.2, and the thickness of a permeable layer in the anti-glare film was 1 μm.

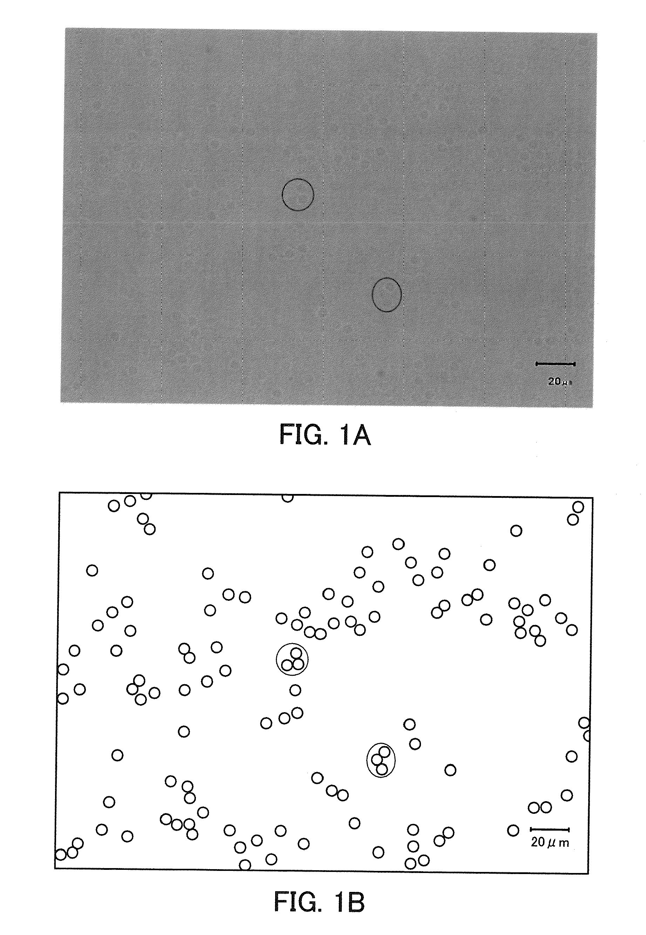

Various characteristics of the obtained anti-glare films of Examples 1 to 14 and Comparative Examples 1 to 4 were measured and evaluated. The results are shown in FIGs. 1A to 6B and Table 1 below.

[Table 1]

| | Particle (pts.wt.) | Thixotropic agent | | Solid content concentration (%) | Particle size D (μm) | Anti-glare layer thickness d (μm) | D/d | Ti value | Haze (%) | Surface profile | | | Particle flocculation state in in-plane direction | Defect in outward appearance (the number of defects/m²) | Anti-glare properties | White blur |
| | | Kind | (pts.wt.) | | | | | | | Ra (μm) | Sm (mm) | θa (°) | | | | |
|---|---|---|---|---|---|---|---|---|---|---|---|---|---|---|---|---|
| Ex. 1 | 2 | Organoclay | 1.5 | 40 | 5.0 | 7.5 | 0.67 | 2.0 | 0.90 | 0.063 | 0.139 | 0.320 | Present | 0 | AA | AA |
| Ex. 2 | 2 | Organoclay | 1.5 | 40 | 3.0 | 7.5 | 0.40 | 2.0 | 1.20 | 0.053 | 0.133 | 0.370 | Present | 0 | A | AA |
| Ex. 3 | 2 | Organoclay | 1.5 | 40 | 6.0 | 7.5 | 0.80 | 2.0 | 0.80 | 0.072 | 0.165 | 0.410 | Present | 0 | AA | AA |
| Ex. 4 | 2 | Organoclay | 1.5 | 35 | 5.0 | 7.5 | 0.67 | 2.0 | 0.90 | 0.117 | 0.199 | 0.390 | Present | 0 | AA | AA |
| Ex. 5 | 2 | Organoclay | 1.5 | 40 | 1.5 | 7.5 | 0.20 | 2.0 | 0.90 | 0.029 | 0.127 | 0.320 | Present | 0 | A | AA |
| Ex. 6 | 2 | Oxidized polyolefin | 4.0 | 32 | 5.0 | 7.5 | 0.67 | 1.7 | 0.80 | 0.103 | 0.201 | 0.400 | Present | 0 | AA | AA |
| Ex. 7 | 2 | Denatured urea | 0.5 | 45 | 5.0 | 7.5 | 0.67 | 1.8 | 3.20 | 0.087 | 0.190 | 0.540 | Present | 0 | AA | AA |
| Ex. 8 | 2 | Organoclay | 0.4 | 37 | 5.0 | 7.5 | 0.67 | 1.3 | 0.90 | 0.049 | 0.145 | 0.152 | Present | 0 | A | AA |
| Ex. 9 | 2 | Organoclay | 1.4 | 37 | 5.0 | 7.5 | 0.67 | 1.8 | 0.90 | 0.076 | 0.185 | 0.238 | Present | 0 | AA | AA |
| Ex. 10 | 2 | Organoclay | 1.5 | 37 | 5.0 | 7.5 | 0.67 | 1.9 | 0.90 | 0.090 | 0.195 | 0.305 | Present | 0 | AA | AA |
| Ex. 11 | 2 | Organoclay | 1.7 | 37 | 5.0 | 7.5 | 0.67 | 2.1 | 0.90 | 0.080 | 0.156 | 0.277 | Present | 0 | AA | AA |
| Ex. 12 | 2 | Organoclay | 2.0 | 37 | 5.0 | 7.5 | 0.67 | 2.3 | 0.90 | 0.067 | 0.140 | 0.247 | Present | 0 | AA | A |
| Ex. 13 | 2 | Organoclay | 2.5 | 37 | 5.0 | 7.5 | 0.67 | 2.6 | 0.90 | 0.043 | 0.096 | 0.200 | Present | 0 | A | A |
| Ex. 14 | 2 | Organoclay | 3.2 | 37 | 5.0 | 7.5 | 0.67 | 3.0 | 0.90 | 0.038 | 0.089 | 0.180 | Present | 0 | B | A |
| Comp. Ex. 1 | 2 | – | 0 | 40 | 5.0 | 7.5 | 0.67 | 1.2 | 0.70 | 0.031 | 0.077 | 0.350 | Present | 4 | C | A |
| Comp. Ex. 2 | 2 | – | 0 | 37 | 5.0 | 7.5 | 0.67 | 1.2 | 0.90 | 0.019 | 0.097 | 0.160 | Present | 11 | C | A |
| Comp. Ex. 3 | 8 | – | 0 | 40 | 5.0 | 7.5 | 0.67 | 1.2 | 1.00 | 0.088 | 0.095 | 0.750 | Present | 39 | AA | A |
| Comp. Ex. 4 | 7 | – | 0 | 37 | 3.0 | 7.5 | 0.40 | 1.2 | 1.10 | 0.018 | 0.066 | 0.248 | Present | 26 | C | A |

As shown in Table 1, the examples showed favorable results in all of evaluations of outward appearance, anti-glare properties, and white blur. On the other hand, in Comparative Examples 1 to 4 with no addition of thixotropy-imparting agents, defects in outward appearance were found in the outward appearance evaluation, and further, in Comparative Examples 1, 2, and 4, anti-glare properties were inferior compared with the examples. As described above, the comparative examples did not show favorable results in all of the characteristics.

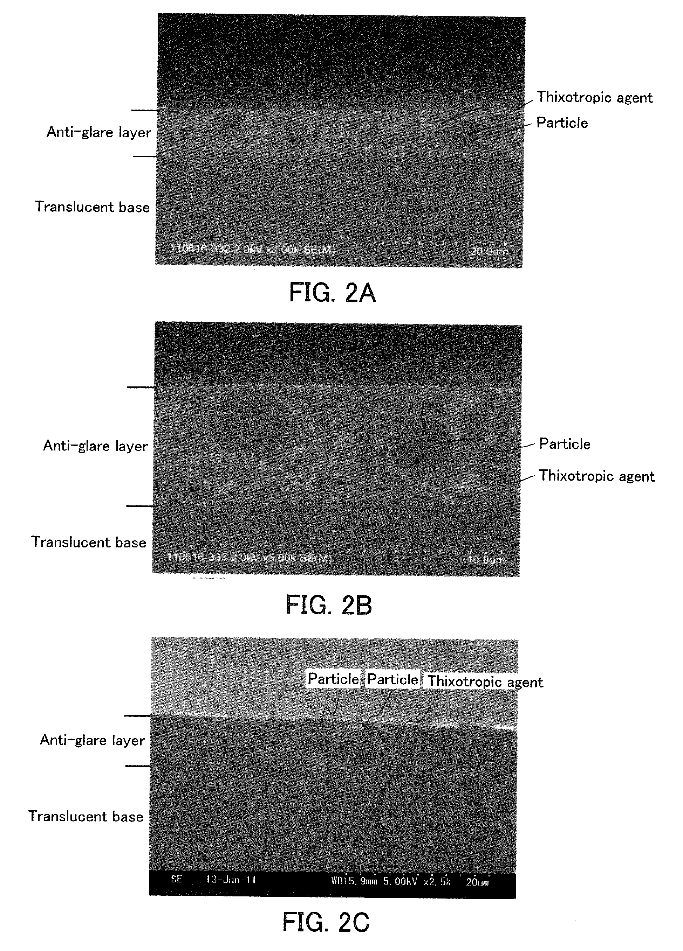

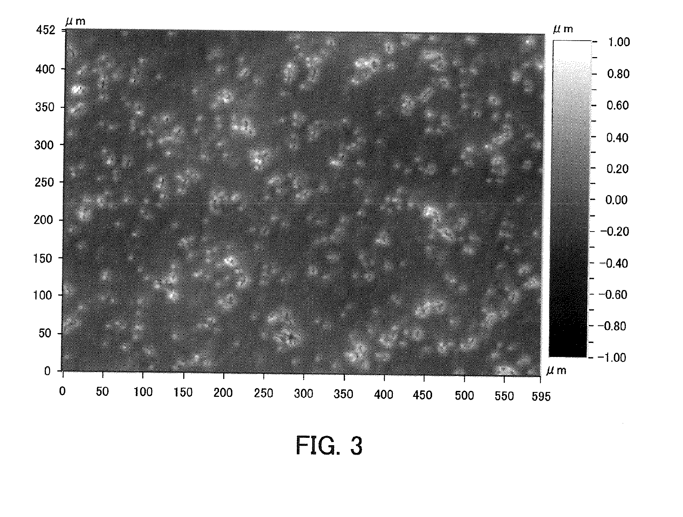

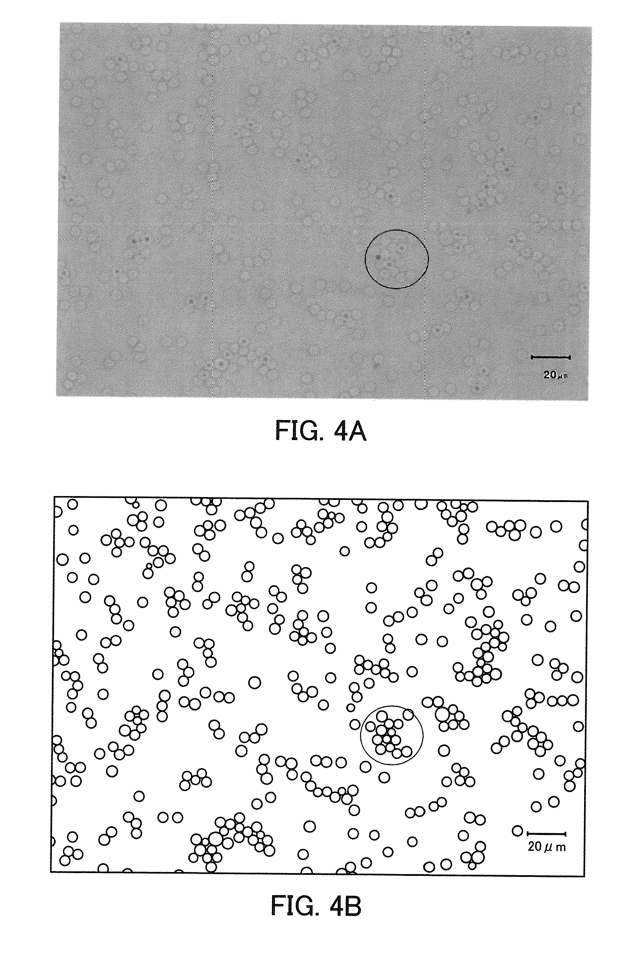

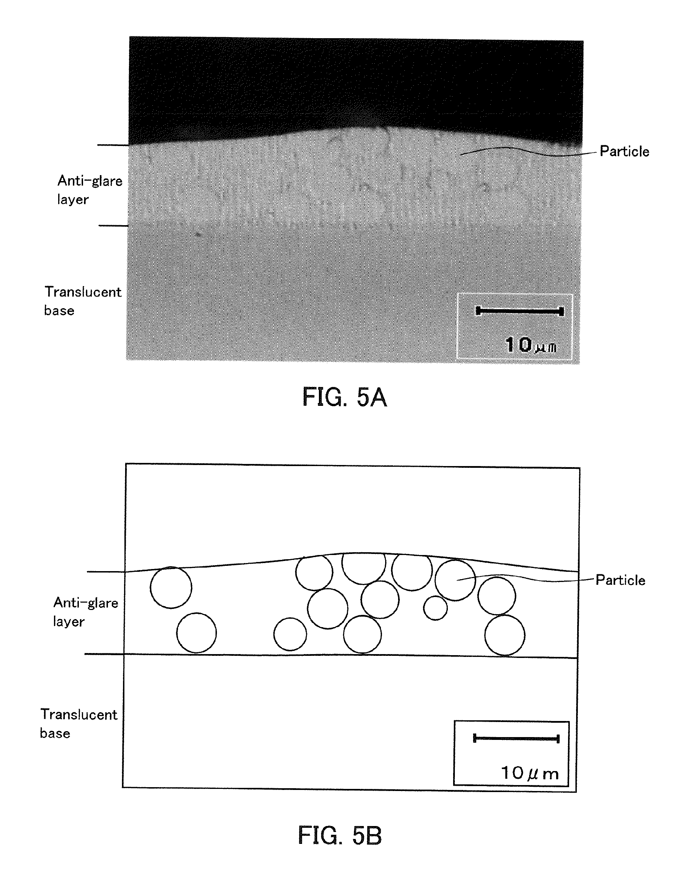

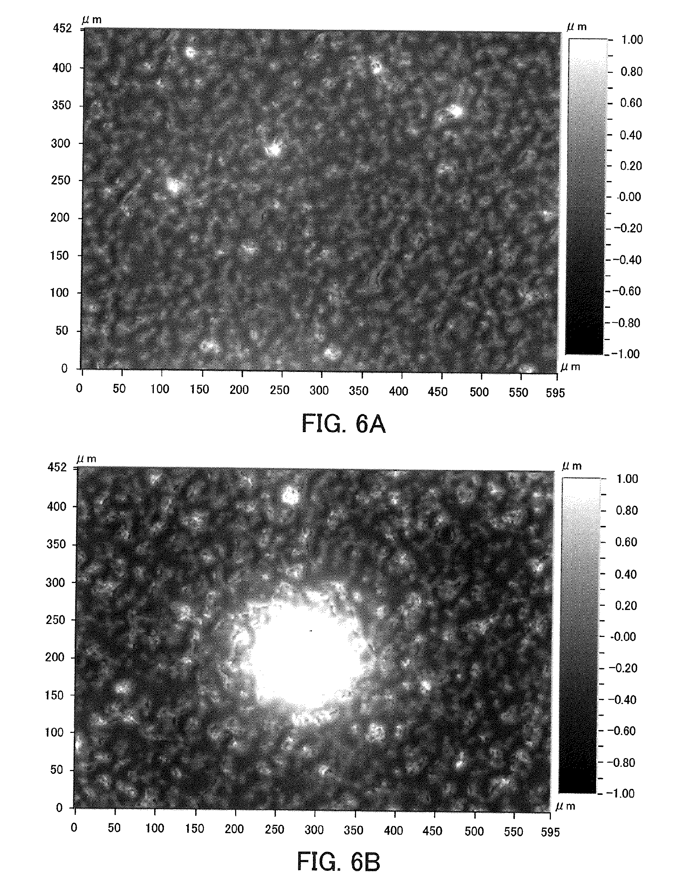

FIG. 1A shows an optical microscope photograph (in the semitransparent mode) of a surface of an anti-glare layer in an anti-glare film obtained in Example 1. FIG. 4A shows an optical microscope photograph (in the semitransparent mode) of a surface of an anti-glare layer in an anti-glare film obtained in Comparative Example 2. FIG. 1B is a schematic view showing a distribution of particles in the photograph of FIG. 1A. FIG. 4B is a schematic view showing a distribution of particles in the photograph of FIG. 4A. FIGs 2A to 2C show SEM (SCANNING ELECTRON MICROSCOPE) photographs of cross-sections of an anti-glare film obtained in Example 1. FIG. 5A is a SEM (SCANNING ELECTRON MICROSCOPE) photograph of a cross-section of an anti-glare film obtained in Comparative Example 2. FIG. 5B is a schematic view showing a distribution of particles in the photograph of FIG. 5A. FIG. 3 shows a profile showing a surface profile of an anti-glare film obtained in Example 1 in three dimensions. FIGs 6A and 6B show profiles showing surface profiles of an anti-glare film obtained in Comparative Example 2 in three dimensions. As can be seen from the surface photograph (see FIGs. 1A and 1B) and the three-dimensional profile (see FIG. 3), in the anti-glare film of Example 1, particles have a domain structure by flocculating in an in-plane direction of the anti-glare layer (i.e., parts enclosed in circles in FIGs. 1A and 1B). Then, a plurality of flocculated portions is not gathered and has a sea-island structure as a whole. As can be seen from the photographs of cross-sections (see FIGs. 2A to 2C), the thixotropy-imparting agents are present at least around the particles in the anti-glare film obtained in Example 1. In contrast, the anti-glare film obtained in Comparative Example 2 has portions formed by overlapping many particles in the thickness direction of the anti-glare layer (i.e., portions enclosed in circles in FIGs. 4A and 4B). When the particles are further overlapped in the thickness direction, the portions are visually identified as defects in outward appearance. FIG. 6A is a three-dimensional profile of a portion of the anti-glare film obtained in Comparative Example 2, having no defect in outward appearance. FIG. 5A is a photograph of a cross-section of a portion which is a defect in outward appearance in the anti-glare film obtained Comparative Example 2. FIG. 6B is also a three-dimensional profile of a portion which is a defect in outward appearance. The height of a convex portion which is the portion having a defect in outward appearance was measured, and the height of the convex portion having a projection as a defect in outward appearance was 0.4 times or more the thickness (7.5 $\mu$m) of the anti-glare layer. Comparing anti-glare films obtained in the examples and the comparative examples, each of surface profiles of the anti-glare films of the examples has asperities with gradual convex portions. By achieving such surface profile having gradual convex portions, favorable anti-glare films can be obtained.

Industrial Applicability

According to the anti-glare film and the method for producing the anti-glare film of the present invention, superior display characteristics of both having anti-glare properties and preventing white blur from occurring are exerted. Moreover, a defect in outward appearance is less prone to occur. Therefore, the anti-glare film according to the present invention can be suitably used in, for example, an optical element such as a polarizing plate, a liquid crystal panel, and an image display such as LCD (liquid crystal display) or OLED (organic EL display), and the use thereof is not limited. Thus, the anti-glare film can be used in a wide range of fields. Explanation of reference numerals [0136]

| | |
|---|---|
| 1 to 6, 12 | particle |
| 11 | anti-glare layer |
| 13 | thixotropy-imparting agent |
| 14, 14a, 14b | convex portion |

**Claims**

1. An anti-glare film comprising:

   a translucent base; and
   an anti-glare layer on at least one surface of the translucent base, wherein
   the anti-glare layer is formed using an anti-glare layer-forming material comprising a resin, particles, and thixotropy-imparting agents,
   the anti-glare layer comprises a flocculated portion forming a convex portion on a surface of the anti-glare layer by flocculation of the particles and the thixotropy-imparting agents, and
   in the flocculated portion, the particles are present in the state of being gathered in an in-plane direction of the anti-glare layer.

2. The anti-glare film according to claim 1, wherein
the thixotropy-imparting agents are at least one kind selected from the group consisting of organoclay, oxidized polyolefin, and denatured urea.

3. The anti-glare film according to claim 1 or 2, wherein
the convex portion has a height from a roughness mean line of the anti-glare layer of less than 0.4 times the thickness of the anti-glare layer.

4. The anti-glare film according to any one of claims 1 to 3, wherein
the number of defects in outward appearance having a maximum diameter of 200 $\mu$m or more is 1 or less per 1 m$^2$ of the anti-glare layer.

5. The anti-glare film according to any one of claims 1 to 4, wherein
the anti-glare layer has a thickness (d) in a range from 3 to 12 $\mu$m, and
the particles have a particle size (D) in a range from 2.5 to 10 $\mu$m.

6. The anti-glare film according to claim 5, wherein
a relationship between the thickness (d) and the particle size (D) satisfies $0.3 \leq D/d \leq 0.9$.

7. The anti-glare film according to any one of claims 1 to 6, wherein
the anti-glare layer comprises 0.2 to 12 parts by weight of the particles and 0.2 to 5 parts by weight of the thixotropy-imparting agents relative to 100 parts by weight of the resin.

8. The anti-glare film according to any one of claims 1 to 7, further comprising a permeable layer formed by permeating the resin through the translucent base between the translucent base and the anti-glare layer.

9. A polarizing plate comprising:

a polarizer; and
the anti-glare film according to any one of claims 1 to 8.

10. An image display comprising the anti-glare film according to any one of claims 1 to 8.

11. An image display comprising the polarizing plate according to claim 9.

12. A method for producing an anti-glare film comprising a translucent base and an anti-glare layer on at least one surface of the translucent base, the method comprising:

an anti-glare layer forming step of coating a coating solution comprising a resin, particles, thixotropy-imparting agents, and a solvent on at least one surface of the translucent base to form a coating layer and curing the coating layer to form an anti-glare layer, wherein
as the coating solution, a coating solution having a Ti value in a range from 1.3 to 3.5 is used.

FIG. 1A

FIG. 1B

Thixotropic agent
Particle
Anti-glare layer
Translucent base

110616-332 2.0kV x2.00k SE(M)    20.0um

FIG. 2A

Anti-glare layer
Particle
Thixotropic agent
Translucent base

110616-333 2.0kV x5.00k SE(M)    10.0um

FIG. 2B

Particle  Particle  Thixotropic agent
Anti-glare layer
Translucent base

SE    13-Jun-11    WD15.9mm 5.00kV x2.5k  20um

FIG. 2C

FIG. 3

FIG. 4A

FIG. 4B

**FIG. 5A**

**FIG. 5B**

FIG. 6A

FIG. 6B

FIG. 7

FIG. 8

FIG. 9A

FIG. 9B

(a)

Coating layer

Translucent base

(b)

Anti-glare layer

Translucent base

FIG. 10A

(a)

(b)

Coating layer

Anti-glare layer

Translucent base

Translucent base

FIG. 10B

(a)

(b)

1  2  3  4  5  6

Coating layer

Translucent base

1  2  3  4  5  6

Anti-glare layer

Parmeable layer

Translucent base

FIG. 10C

(a)

1  4
5  6

Coating layer

2  3

Translucent base

(b)

1  4
5  6

Anti-glare layer

Parmeable layer

2  3

Translucent base

FIG. 10D

EP 2 725 393 A1

FIG. 11A

12

FIG. 11B

<table>
<tr><td colspan="2" style="text-align:center"><b>INTERNATIONAL SEARCH REPORT</b></td><td>International application No.<br>PCT/JP2012/066621</td></tr>
</table>

| A. CLASSIFICATION OF SUBJECT MATTER |
|---|
| *G02B5/02*(2006.01)i, *B32B7/02*(2006.01)i, *B32B27/18*(2006.01)i, *G02F1/1335*(2006.01)i, *G09F9/00*(2006.01)i |

According to International Patent Classification (IPC) or to both national classification and IPC

| B. FIELDS SEARCHED |
|---|
| Minimum documentation searched (classification system followed by classification symbols)<br>G02B5/02, B32B7/02, B32B27/18, G02F1/1335, G09F9/00 |

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2008-3426 A (Nippon Zeon Co., Ltd.),<br>10 January 2008 (10.01.2008),<br>paragraphs [0072], [0079], [0137]<br>(Family: none) | 1,12<br>2-11 |
| Y | JP 2008-268939 A (Fujifilm Corp.),<br>06 November 2008 (06.11.2008),<br>paragraph [0201]<br>& US 2008/0247045 A1 | 2-11 |
| Y | JP 2007-293303 A (Fujifilm Corp.),<br>08 November 2007 (08.11.2007),<br>paragraph [0106]<br>& US 2007/0229804 A1 | 2-11 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>19 September, 2012 (19.09.12) | Date of mailing of the international search report<br>02 October, 2012 (02.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/066621 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2008-262190 A  (Dainippon Printing Co., Ltd.), 30 October 2008 (30.10.2008), paragraph [0109] & US 2008/0260997 A1    & KR 10-2008-0085742 A & CN 101308220 A | 8-11 |
| A | JP 2007-264113 A  (Fujifilm Corp.), 11 October 2007 (11.10.2007), entire text; all drawings (Family: none) | 1-12 |
| A | JP 2007-193017 A  (Fujifilm Corp.), 02 August 2007 (02.08.2007), entire text; all drawings (Family: none) | 1-12 |
| A | JP 2007-133384 A  (Fujifilm Corp.), 31 May 2007 (31.05.2007), entire text; all drawings (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008257255 A
- JP 4641846 B
- JP 2008090263 A
- JP 2008088309 A
- JP 2001343529 A
- WO 0137007 A